(19) Europäisches Patentamt
European Patent Office
Office européen des brevets

(11) **EP 3 064 435 A1**

(12) **EUROPEAN PATENT APPLICATION**

(43) Date of publication:
**07.09.2016 Bulletin 2016/36**

(21) Application number: **15382090.7**

(22) Date of filing: **03.03.2015**

(51) Int Cl.:
*B64D 39/00* (2006.01)          *G01P 3/38* (2006.01)
*G01B 11/14* (2006.01)          *G05D 1/02* (2006.01)
*G05D 1/10* (2006.01)          *G01S 11/12* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Airbus Defence and Space, S.A.**
**28906 Getafe (Madrid) (ES)**

(72) Inventors:
• **Villalta Oliveira, Beatriz**
  **28906 Getafe (ES)**
• **Coll Herrero, Francisca**
  **28906 Getafe (ES)**

(74) Representative: **Elzaburu S.L.P.**
  **C/ Miguel Angel, 21**
  **28010 Madrid (ES)**

(54) **Systems and methods for the calculation of relative distances and speeds in the three coordinate axis between aircraft in flight**

(57)    The invention provides systems and methods of low cost and high precision to compute relative distances and speeds between, for example, a tanker aircraft (13) and a receiver aircraft (11) during a refuelling operation. The core of the invention is identifying the coordinates x, y, z of the trajectory of a pattern point (45) of the receiver aircraft (11) from a sequence of digital frames (35, 35', ...) obtained with a video camera (31) placed in the tanker aircraft (13) in a suitable position to visualize frontally the receiver aircraft (11).

FIG. 8

EP 3 064 435 A1

**Description**

**FIELD OF THE INVENTION**

This invention relates generally to systems and methods for calculating relative distances and speeds in the three coordinate axes between aircraft in flight when they carry out approach operations from one to another such as those performed for refuelling or between other objects in which at least one of them moves relative to the other to perform a certain operation.

**BACKGROUND**

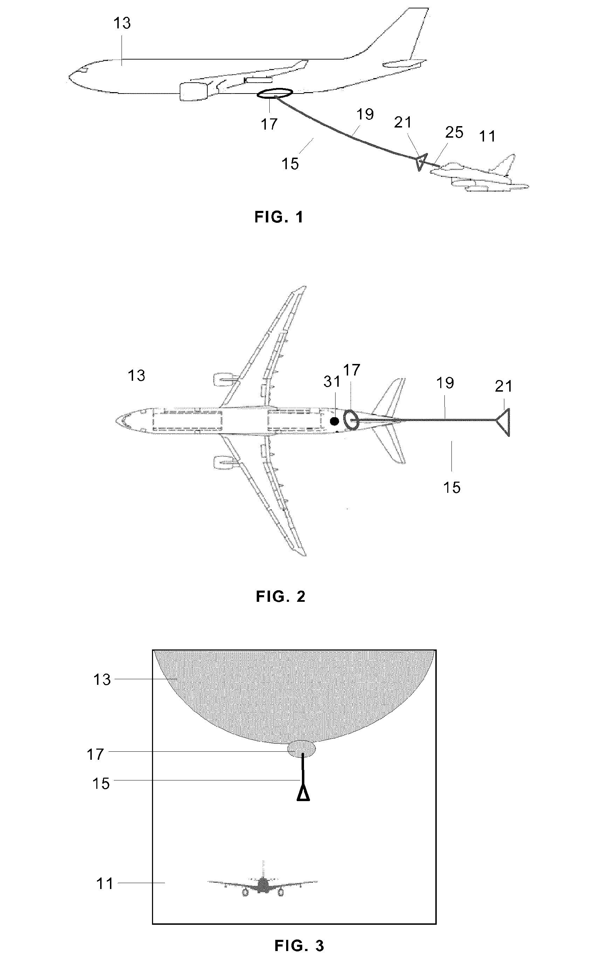

Fig. 1 shows a known method for conducting air to air refuelling operations that uses a hose and drogue device 15.
This refuelling method employs a flexible hose 19 that is trailed from the tanker aircraft 13. Drogue 21 is an accessory that resembles a cone-vane that is joined at its final extension with a valve to flexible hose 19. Drogue 21 stabilizes hose 19 in flight and provides a channel that helps the insertion of the probe 25 of receiver aircraft 11 on hose 19.
The hose and drogue device 15 is connected to a drum unit located in a gondola 17 of the tanker aircraft 13, in which it is rolled up when not in use. Gondola 17 may be located on the rear portion of fuselage of tanker aircraft 13 as shown in Fig. 1, although it may also be located on a wing.
Probe 25 of receiver aircraft 11 is a rigid arm located in the fuselage or in the nose of the aircraft. Probe 25 is normally withdrawn when not in use, especially on high speed aircraft. At the end of probe 25 there is a valve that is closed until it connects to hose 19, after which it opens and allows flux of fuel from tanker aircraft 13 to receiver aircraft 11.
The approach operation of a receiver aircraft 11 to a tanker aircraft 13 to carry out an air to air refuelling operation is a delicate operation which, if not executed properly, may result in failed approaches or, even rupture of the fuel shut off valve, thereby preventing the refuelling operation of receiver aircraft 11.
One of the relevant aspects of the approach operation is the control of the relative distances and speeds to carry out satisfactorily the refuelling operation.
Systems and methods known in the art for detecting distances such as radar systems and GPS (initials of "Global Positioning System") systems are not suitable for approach operations such as those carried out for air to air refuelling for its high cost and/or inaccuracy.
Spanish patent application ES 2 436 726 A1 describes systems and methods for calculating the relative speed between a tanker aircraft and a receiver aircraft processing images of the refuelling scenario captured with a video camera disposed in tanker aircraft to visualize laterally said scenario.

**SUMMARY OF THE INVENTION**

It is an object of the present invention to provide systems and methods of low cost and high precision to compute (especially on real time) relative distances and speeds between two objects of which at least one moves relative to the other to perform a specific operation.
The invention provides a system to calculate the relative distances *dx, dy, dz* and relative speeds *vx, vy, vz* in the three axes X, Y, Z of a reference coordinate system between a first object and a second object wherein at least one of them moves relative to the other comprising: a) a video camera placed in the first object in a suitable position to visualize frontally said relative movement, being identified the coordinates *x1, x2, x3* of its position in said reference coordinate system and their intrinsic parameters; b) computational means arranged to calculate said relative distances *dx, dy, dz* and relative speeds *vx, vy, vz.*
The invention provides a method to calculate said relative distances *dx, dy, dz* and relative speeds *vx, vy, vz* comprising the following steps: a) obtaining a sequence of digital frames of relative motion of the second object with respect to the first object with said video camera; b) calculating the coordinates *x, y, z* of the trajectory of a pattern point of the second object in said reference coordinate system recognized in said digital frames and calculating from them and from the coordinates *x1, y1, z1* of the video camera position said relative distances *dx, dy, dz* and relative speeds *vx, vy, vz.* Coordinate *x* is calculated from the size *y2* of a pattern element of the second object recognized in said digital frames and its real size *y2.* Coordinates *y, z* are calculated from the 2D coordinates of that pattern point in the digital frames.
In one embodiment the first object is a tanker aircraft and the second object is a receiver aircraft during a refuelling operation using a hose and drogue refuelling device.
In one embodiment, the first object is a tanker aircraft and the second object is a receiver aircraft during a refuelling operation using a boom refuelling device.
Other desirable features and advantages will become apparent from the following detailed description of the invention and appended claims in connection with the accompanying drawings.

**BRIEF DESCRIPTION OF THE DRAWINGS**

Figure 1 is a schematic view of a refuelling operation between a tanker aircraft and a receiver aircraft using a hose and drogue device.

Figure 2 is a bottom plan view of a tanker aircraft displaying the position of the hose and drogue device and the position of the video camera.

Figure 3 is a schematic view of an image of the refuelling scenario of a receiver aircraft by a tanker aircraft.

Figure 4 is an illustration of the relationship between the actual size of an object and the size of that object in a digital frame obtained with the video camera.

Figure 5 is a schematic view of a receiver aircraft in which the pattern element and the pattern point that have been chosen to be recognized in successive digital frames of the receiver aircraft during the approach operation to the tanker aircraft are shown.

Figures 6a and 6b are two schematic views of two digital frames of the receiver aircraft during the approach operation to the tanker aircraft.

Figure 7 is an illustrative three-dimensional diagram of the positions of the camera and the pattern point in the reference coordinate system.

Figure 8 is an illustrative view of a system screen showing at the left side the evolution of relative distances and speeds between the two aircraft during the approach operation and at the right side the images taken by the video camera.

**DETAILED DESCRIPTION OF THE INVENTION**

An embodiment of the invention for refuelling operations using a hose and drogue device refuelling will now be described.

Figure 2 shows tanker aircraft 13 having a gondola 17 located on the ventral zone of the fuselage from which the hose and drogue refuelling device 15 is deployed as well as video camera 31 for capturing images of the refuelling scenario also located on the ventral zone of the fuselage behind gondola 17.

Figure 3 shows an image taken by video camera 31 in which receiver aircraft 11 may be seen approaching to the hose and drogue device 15 of tanker aircraft 13.

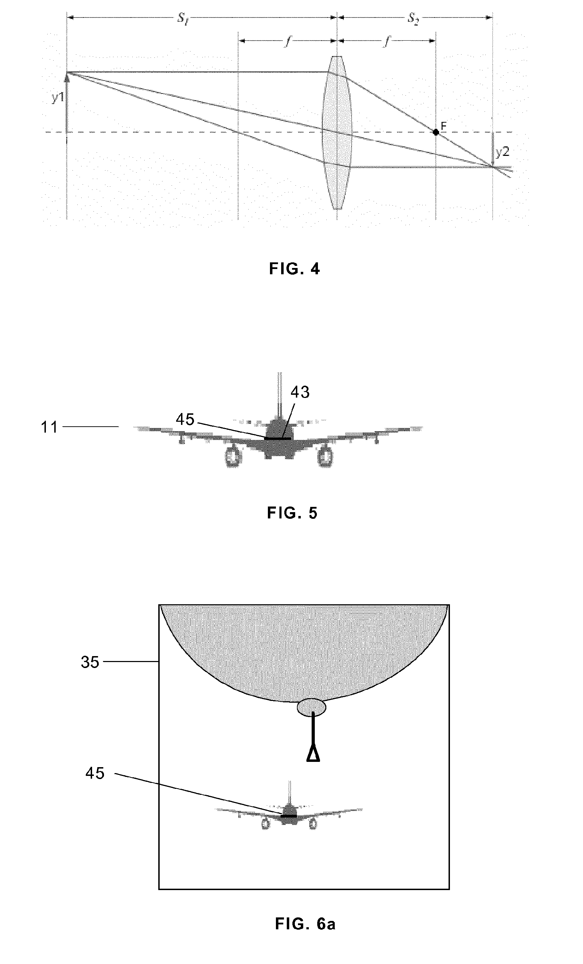

The relationship between the size of an object shown in an image taken by said video camera 31 and the actual size of the object (see Figure 4) satisfies the following equation:

$$\frac{1}{S_1} + \frac{1}{S_2} = \frac{1}{f} \quad y \quad \frac{y_1}{S_1} = \frac{y_2}{S_2} \qquad \text{[Eq. 1 \& Eq. 2]}$$

being $y1$ the actual size of the object, $y2$ the size of the object in the image, $S1$ the horizontal distance between the object and the lens, S2 the distance between the lens and the camera sensor and f the focal length of the lens

Therefore the horizontal distance $S1$ is:

$$S_1 = \frac{f \cdot (y_1 + y_2)}{y_2} \qquad \text{[Eq. 3]}$$

where $y2$ = n.$\alpha$, being n the number of pixels and $\alpha$ the conversion factor of pixels to meters

The video camera 31 must be calibrated to relate the pixels of the image with the actual distances in the refuelling scenario. The purpose of calibration of the camera is to obtain the center of the image, the focal length, the aberration and the conversion factor of pixels to meters and is made identifying an object of known dimensions in an image and using a calibration tool.

Using, for example, the Matlab calibration "toolbox" the focal length in pixels is obtained and the following expression is used to convert it to mm:

$$f_{x,y}[mm] = \frac{f_{x,y}[pixels] \cdot sensor_{x,y}[mm]}{Image_{x,y}[pixels]} \qquad \text{[Eq. 4]}$$

where *sensorx,y* is the size of the sensor of the video camera 31, *fx,y* is the focal length and *Imagex,y* is the dimension of the object image.

To calculate the conversion factor $\alpha$, is necessary to evaluate [Eq. 3] at different known distances **(S1).**

$$\alpha = \frac{f[mm] \cdot y_1}{n \cdot (S_1 - f[mm])} \qquad \text{[Eq. 5]}$$

The invention provides a method for obtaining the relative distances *dx, dy, dz,* and relative speeds *vx, vy, vz* between receiver aircraft 11 and tanker aircraft 13 processing in a computer (not shown in Figures) placed on the tanker aircraft 13 the digital frame sequence 35, 35', ... provided by the video camera 31 in the manner that will be described below.

The computer can be connected directly to the video camera 31 or receive the digital frames by telemetry.

A suitable video camera for the invention is, for example, a camera that provides digital frames with a resolution of 656x758 pixels at a rate of 24 frames per second.

The process begins when it is decided by the operator on the tanker aircraft 13 which is watching on a screen of the system the images provided by the video camera 31, in view of the evolution of the approach operation.

In that process, a previously chosen pattern element 43 of the receiver aircraft 11, such as (see Figure 4) the larger horizontal line that can be drawn inside a cross section of its fuselage, will be recognized in the digital frames 35, 35', ... provided by the video camera 31 through well-known recognition techniques. On the other hand one end of the pattern element 43 will be used as pattern point 45 of the position of the receiver aircraft 11 in the approach operation to the tanker aircraft 13.

Since the types of receiver aircraft 11 that can approach a tanker aircraft 13 are previously known, the system can know the real size *y1* of pattern element 43 for all types of receiving aircraft and allocate the corresponding to the receiver aircraft identified from the first digital frame 35 of the sequence.

The method of the invention allows calculating the coordinates *x, y, z* of the pattern point 45 during said operation in a reference coordinate system reference and obtaining the relative distances *dx, dy, dz,* and relative speeds *vx, vy, vz* between the receiver aircraft 11 and the tanker aircraft 13 by comparing them with the coordinates *x1, y1, z1* of the position of the video camera 31 using well known calculation methods.

The coordinates *x1, y1, z1* position and attitudes (Euler angles) with respect to a reference coordinate system X, Y, Z of the video camera 31 are calculated once using the Newton Raphson method from known measures that appear in the image and the characteristics of the camera (focal distance, centre and aberrations). Actual measurements of these points are obtained, for example, using a laser theodolite.

The coordinate **x** of the pattern point 45 corresponding to each digital frame 35, 35'... is obtained from the size *y2* of the pattern element 43 in said digital frames applying above mentioned **Eq. 3** as the coordinate **x** coincides with the variable S1 of that equation.

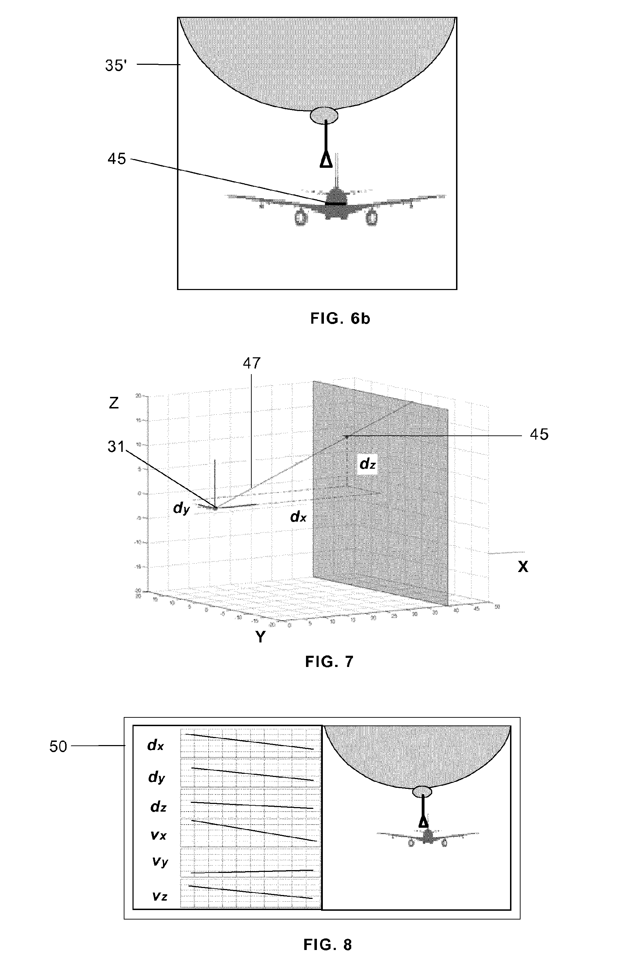

The coordinates *y, z* are obtained by identifying the position of the pattern point 45 in the reference coordinate system X, Y, Z as the intersection of the straight line 47 passing through the position of the video camera 31 towards the corresponding coordinates to the 2D coordinates of the pattern point 45 in each frame 35, 35', ... in that reference coordinate system with a plane perpendicular to axis X at the distance of coordinate x (see Figure 7).

As shown in Figure 8 the evolution of relative distances *dx, dy, dz,* and relative speeds *vx, vy, vz* between receiver aircraft 11 and tanker aircraft 13 may be displayed on the left side of a screen 50 together with images of the approach operation on the right side.

The precision obtained in measuring distances with the method of the invention is $\pm 0.15$m which represents a significant advantage over other methods and systems taking into account the low cost of image processing used in the invention.

The invention is also applicable to refuelling operations using a boom device.

Although the present invention has been described in detail in connection with an approach operation of a receiver aircraft to a tanker aircraft for refuelling, it is understood from the above that combinations of elements, variations or improvements may be made that are within the scope of the invention as defined in the following claims.

**Claims**

1.  System for calculating the relative distances *dx, dy, dz* and relative speeds *vx, vy, vz* in the three axes X, Y, Z of a reference coordinate system between a first object (13) and a second object (11) of which at least one of them moves relative to the other to perform a certain operation, comprising:

    a) a video camera (31) placed in the first object (13) in a suitable position to visualize frontally said relative movement, being identified in said reference coordinate system the coordinates *x1, x2, x3* of its position and being calibrated said video camera (31) to know its focal length f and the actual distance $\alpha$ corresponding to a pixel in a digital frame;
    b) computational means arranged to calculate said relative distances *dx, dy, dz* and relative speeds *vx, vy, vz* by processing a sequence of digital frames (35, 35'...) of the relative motion of the second object (11) with respect to the first object (13) obtained by said video camera (31) in which:

       b1) coordinates *x, y,* z of the trajectory of a pattern point (45) of the second object (11) in said reference coordinate system, the pattern point (45) being contained in a pattern element (43) appropriately chosen to know its actual size *y1* and to recognize it in each frame (35, 35'...), are calculated by means of the following operations:

          - coordinate **x** is calculated from the focal length **f** of the lens of the video camera (31), the actual size *y1* of the pattern element (43) and its size in pixels *y2* in each frame (35, 35'...);
          - coordinates *y, z* are calculated identifying for each digital frame (35, 35', ...) the 2D coordinates of said pattern point (45), determining its position in the reference coordinate system as the intersection of a straight line (47) passing through the position of the video camera (31) with the direction corresponding to said 2D coordinates of the pattern point (45) with a plane perpendicular to axis X at the distance **x** from the position of the video camera (31);

       b2) calculating said relative distances *dx, dy, dz* and relative speeds *vx, vy, vz* from the path defined by the coordinates *x, y,* z of said pattern point (45) with respect to the coordinates *x1, y1, z1* of the position of the video camera (31).

2.  System according to claim 1, wherein said relative distances *dx, dy, dz* and relative speeds *vx, vy, vz* are calculated in real time and the system also comprises means for displaying them on a screen (50).

3.  System according to any of claims 1-2, wherein the first object (13) is a first aircraft and the second object (11) is a second aircraft that performs an approach operation to the first aircraft (13) in flight.

4.  System according to claim 3, wherein said pattern element (43) is the larger horizontal line that can be drawn inside a cross section of the fuselage of the second aircraft (11) and said pattern point (45) is an end of said pattern element (43).

5.  System according to claim 4, wherein the second aircraft (11) is identified by image recognition techniques from the first digital frame (35) and the actual size *y1* of the pattern element (43) is obtained in a data base containing such data for each type of second aircraft (11) involved in such approach operations.

6.  System according to any of claims 3-5, wherein the first aircraft (13) is a tanker aircraft provided with a hose and drogue device (15) located on its ventral area, the second aircraft (11) is a receiver aircraft and the approach operation is a refuelling operation.

7.  System according to any of claims 3-5, wherein the first aircraft (13) is a tanker aircraft provided with a boom device, the second aircraft (11) is a receiver aircraft and the approach operation is a refuelling operation.

8.  Method for calculating the relative distances *dx, dy, dz* and relative speeds *vx, vy, vz* in the three axes X, Y, Z of a reference coordinate system between a first object (13) and a second object (11) of which at least one of them moves relative to the other to perform a certain operation, comprising the following steps:

a) obtaining a sequence of digital frames (35, 35'...) of the relative motion of the second object (11) with respect to the first object (13) with a video camera (31) placed in the first object (13) in a suitable position to visualize frontally said relative movement, being known the coordinates *x1, x2, x3* of its position in said reference coordinate system, their Euler angles, its focal length f and the actual distance $\alpha$ corresponding to a pixel in a digital frame;

b) calculating the coordinates *x, y, z* of the trajectory of a pattern point (45) of the second object (11) in said reference coordinate system in the following sub-steps:

b1) recognizing in said sequence of digital frames (35, 35'...) a pattern element (43), appropriately chosen to know its actual size *y1* and to recognize it in each frame (35, 35'...), that contains said pattern point (45);
b2) calculating coordinate **x** from the focal length **f** of the lens of the video camera (31), the actual size *y1* of the pattern element (43) and its size in pixels *y2* in each frame (35, 35'...);
b3) calculating coordinates *y, z*:

- identifying for each digital frame (35, 35', ...) the 2D coordinates of said pattern point (45);
- determining the position of said pattern point (45) in said reference coordinate system as the intersection of a straight line (47) passing through the position of the video camera (31) with the direction corresponding to said 2D coordinates of the pattern point (45) with a plane perpendicular to axis X at the distance x from the position of the video camera (31);

c) calculating said relative distances *dx, dy, dz* and relative speeds *vx, vy, vz* from the path defined by the *x, y, z* coordinates of said pattern point (45) corresponding to each digital frame (35, 35', ...) with respect to the coordinates *x1, y1, z1* of the position of the video camera (31).

9. Method according to claim 8, wherein said relative distances *dx, dy, dz* and relative speeds *vx, vy, vz* are calculated in real time.

10. Method according to any of claims 8-9, wherein the first object (13) is a first aircraft and the second object (11) is a second aircraft that performs an approach operation to the first aircraft (13) in flight.

11. Method according to claim 10, wherein said pattern element (43) is the larger horizontal line that can be drawn inside a cross section of the fuselage of the second aircraft (11) and said pattern point (45) is an end of said pattern element (43).

12. Method according to claim 11, wherein the second aircraft (11) is identified by image recognition techniques from the first digital frame (35) and the actual size *y1* of the pattern element (43) is obtained in a data base containing such data for each type of second aircraft (11) involved in such approach operations.

13. Method according to any of claims 10-12, wherein the first aircraft (13) is a tanker aircraft provided with a hose and drogue device (15) located on its ventral area, the second aircraft (11) is a receiver aircraft and the approach operation is a refuelling operation.

14. Method according to any of claims 10-12, wherein the first aircraft (13) is a tanker aircraft provided with a boom device, the second aircraft (11) is a receiver aircraft and the approach operation is a refuelling operation.

FIG. 1

FIG. 2

FIG. 3

**FIG. 4**

**FIG. 5**

**FIG. 6a**

**FIG. 6b**

**FIG. 7**

**FIG. 8**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 324 295 B1 (VALERY PHILIPPE [FR] ET AL) 27 November 2001 (2001-11-27) | 1-14 | INV. B64D39/00 |
| Y | * abstract * * column 4, line 37 - column 11, line 2 * * figures 1-9 * | 1-14 | G01P3/38 G01B11/14 G05D1/02 G05D1/10 G01S11/12 |
| X | US 2013/334370 A1 (COLL HERRERO FRANCISCA [ES] ET AL) 19 December 2013 (2013-12-19) | 1-14 | |
| Y | * abstract * * paragraph [0022] - paragraph [0040] * * figures 1-6 * | 1-14 | |
| A | US 5 373 318 A (HARRIMAN WALTER L [US]) 13 December 1994 (1994-12-13) * abstract * * column 2, line 18 - column 4, line 68 * * figures 1-4 * | 1-14 | |
| A | US 2014/376768 A1 (TROY JAMES J [US] ET AL) 25 December 2014 (2014-12-25) * abstract * * paragraph [0030] - paragraph [0095] * * figures 3-14 * | 1-14 | |

TECHNICAL FIELDS
SEARCHED        (IPC)

B64D
G01P
G01B
G05D
B64G
G01S

The present search report has been drawn up for all claims

| Place of search | Date of completion of the search | Examiner |
|---|---|---|
| Munich | 9 September 2015 | Kokkonen, Jukka |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 38 2090

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2015

| Patent document cited in search report | | | Publication date | Patent family member(s) | | | Publication date |
|---|---|---|---|---|---|---|---|
| US 6324295 | B1 | | 27-11-2001 | CA | 2253955 | A1 | 20-11-1997 |
| | | | | DE | 69702716 | D1 | 07-09-2000 |
| | | | | DE | 69702716 | T2 | 05-04-2001 |
| | | | | EP | 0934194 | A1 | 11-08-1999 |
| | | | | FR | 2748450 | A1 | 14-11-1997 |
| | | | | IL | 126921 | A | 28-01-2001 |
| | | | | JP | 2000509343 | A | 25-07-2000 |
| | | | | US | 6324295 | B1 | 27-11-2001 |
| | | | | WO | 9743180 | A1 | 20-11-1997 |
| US 2013334370 | A1 | | 19-12-2013 | ES | 2436726 | A2 | 03-01-2014 |
| | | | | US | 2013334370 | A1 | 19-12-2013 |
| US 5373318 | A | | 13-12-1994 | NONE | | | |
| US 2014376768 | A1 | | 25-12-2014 | US | 2014376768 | A1 | 25-12-2014 |
| | | | | US | 2015207987 | A1 | 23-07-2015 |
| | | | | WO | 2014204548 | A1 | 24-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2436726 A1